Europäisches Patentamt

(19) European Patent Office

Office européen des brevets

(11) Numéro de publication: **0 214 172**
**B1**

(12) **FASCICULE DE BREVET EUROPEEN**

(45) Date de publication du fascicule du brevet: **22.11.90**

(21) Numéro de dépôt: **86901096.7**

(22) Date de dépôt: **13.02.86**

(86) Numéro de dépôt international:
**PCT/FR86/00043**

(87) Numéro de publication internationale:
**WO 86/04987 28.08.86 Gazette 86/19**

(51) Int. Cl.⁵: **G 01 J 3/46**

(54) **PROCEDE ET APPAREILLAGE PERMETTANT DE CONTRETYPER UNE TEINTE A PARTIR D'UNE COLLECTION DE TEINTES DE BASE.**

(30) Priorité: **15.02.85 FR 8502184**

(43) Date de publication de la demande:
**18.03.87 Bulletin 87/12**

(45) Mention de la délivrance du brevet:
**22.11.90 Bulletin 90/47**

(84) Etats contractants désignés:
**AT BE CH DE FR GB IT LI LU NL SE**

(56) Documents cités:
**FR-A-2 181 213**
**US-A-3 159 742**
**US-A-3 476 132**
**US-A-3 601 589**
**R. Burnham et al.: "Color: A guide to basic facts and concepts", 1964, John Wiley, New York, (US), chapter 6 "Colorimetriy", pages 123-151**
**Journal of the American Association of Textile Chemist and Colorists, vol. 5, no.9, September 1973; R.E. Derby: "Color, color measurement and colorant fprmulation in the textile industry", pages 188-196**

(73) Titulaire: **GUILLEMIN, Jean-Pierre**
**2a, rue Henri Barbusse**
**F-51100 Reims (FR)**

(72) Inventeur: **GUILLEMIN, Jean-Pierre**
**2a, rue Henri Barbusse**
**F-51100 Reims (FR)**

(74) Mandataire: **Sauvage, Renée**
**Cabinet Sauvage 100 bis, avenue de Saint-Mandé**
**F-75012 Paris (FR)**

(56) Documents cités:
**W. Schultze, Fabenlehre und Farbenmessung, Berlin-Heidelberg-New York (1966), Seite 41-43. Modern Paints and Coatings (Sept. 1980), p. 41-44**

Courier Press, Leamington Spa, England.

**Description**

La présente invention a pour objet un procédé et un appareillage permettant de contretyper une teinte par formulation absolue d'une composition faite à partir d'une collection de teintes de base, sans mesure de la courbe de réflectance de la teinte à contretyper.

De nombreuses industries sont dans l'obligation de peindre leur production avec des peintures spécifiquement adaptées aux types de leurs fabrications dans des teintes parfois très nombreuses. Cela entraîne deux contraintes:

1) les peintures de série produites par les grands fabricants ne conviennent pas

2) les quantités par teinte (souvent inférieures à 100 Kg), sont peu rentables et entraînent, outre un prix de revient élevé, des difficultés d'approvisionnement tant au plan qualité qu'au plan délai: Peu de fabricants de peintures sont structurés pour répondre à cette demande qui cependant s'accroît considérablement à l'heure actuelle.

La réponse à ce problème existe au niveau des fabricants de peintures. Mais elle exige un investissement relativement élevé et demande du personnel qualifié.

En effet, jusqu'à présent, on utilise, pour ce faire, un spectrophotomètre qui détermine le spectre de réflectance, ou courbe de réémission spectrale, de l'échantillon à contretyper, c'est-à-dire la relation entre R, le coefficient de réflectance, et les coefficients d'absorption K et de diffusion S de la teinte de l'échantillon, sur tout le spectre visible (400—700 nm) pris à intervalles réguliers de longueur d'ondes, selon la loi de Kubelka-Munk

$$\frac{K}{S} = \frac{(1-R)^2}{2R} \qquad (I)$$

pour chaque longueur $\lambda$ d'onde donnée.

En connaissant le spectre de réflectance des teintes de base et en appliquant la relation:

$$\frac{K}{S} M(\lambda) = \frac{KA(\lambda) \times CA}{SA(\lambda) \times CA} + \frac{KB(\lambda) \times CB}{SB(\lambda) \times CB} + \frac{\dots}{\dots} + \frac{KW(\lambda) \times CW}{SW(\lambda) \times CW} \qquad (II)$$

où la signification des symboles utilisés est la suivante:

M=mélange des teintes de base
A=première teinte de base
B=deuxième teinte de base
W=blanc de base
C=concentration de la teinte de base concernée

on peut calculer la formulation de recettes de teinte. Ce calcul est évidement très complexe et nécessite l'utilisation d'un ordinateur.

Le matériel actuellement proposé sur le marché mondial, pour la mise en oeuvre de ce procédé, est composé d'un spectrophotocolorimètre couplé à un ordinateur généralement de 16 bits. Ces deux types de matériel liés à un logiciel complexe impliquent une dépense minimum de quelques 500 000 FF (1985) pour leur acquéreur. Ce prix limite leur emploi à quelques utilisateurs dont le volume de chiffre d'affaires permet l'amortissement économique d'un tel achat.

En outre, ce matériel est conçu pour la recherche et il exige un personnel qualifié capable d'exploiter les informations fournies. En effet, pour une teinte à contretyper, une dizaine de formulations est proposée. Seul un spécialiste peut choisir la formule la mieux adaptée au problème posé.

D'un autre côté, on a proposé des appareils (Modern Paint and Coatings, Sept. 80 p41—44 et US—A—3 476 132) qui mettent en oeuvre des procédés utilisant, non pas un spectrophotomètre, mais un colorimètre à filtres, dit également tristimulus. Ces procédés ne réalisent pas une formulation absolue, mais une formulation *différentielle.*

En effet, ils consistent à partir d'un mélange effectivement réalisé, puis à corriger ce mélange pour aboutir à ladite teinte.

La présente invention a pour but d'apporter un procédé et un appareillage permettant de contretyper une teinte par formulation absolue dans des conditions beaucoup plus économiques que la seule technique le permettant actuellement et n'exigeant pas d'avoir recours à du personnel qualifié.

Ce but est atteint en ce sens que le procédé élimine la détermination du spectre de réflectance de l'échantillon à contretyper, à laquelle il substitue la détermination des coordonnées trichromatiques x, y et la composante trichromatique Y de la teinte dudit échantillon.

Cette approche du problème est tout à fait contraire aux préjugés existants dont on trouve la preuve, notamment dans la brochure "Mesure de la couleur et repérage" par Claude NEVEU, publiée par le Centre Français de la Couleur, où il est dit, page 22, "sur les colorimètres: impossibilité de formulation de teinte".

Il s'ensuit qu'il devient possible d'utiliser, pour un temps de recherche de formule industriellement acceptable, au lieu d'un spectrophotomètre, un colorimètre de contrôle tristimulus et au lieu d'un ordinateur à 16 bits, un calculateur à 8 bits. Le logical mis en oeuvre étant relativement simple, le prix de revient de l'ensemble peut être jusqu'à cinq fois inférieur à celui du matériel actuellement disponible.

Plus précisément, le procédé selon l'invention consiste:

a) — à constituer un premier fichier formé, d'une part, des valeurs des composantes trichromatiques spectrales $\bar{x}(\lambda)$, $\bar{y}(\lambda)$ et $\bar{z}(\lambda)$ fournies par la C.I.E. et, d'autre part, de la courbe de l'illuminant $E(\lambda)$ sous lequel travaille un colorimètre qui sera utilisé pour mesurer l'échantillon à contretyper,

b) — à constituer selon la loi de Kubelka-Munk un second fichier formé des valeurs de coefficient d'absorption K et de coefficient de diffusion S de chaque teinte de base à chaque longueur d'onde,

c) — à calculer, à partir de ces deux fichiers, les valeurs de trois caractéristiques (Y, Pu, λd), fonctions des composantes trichromatiques X, Y et Z, pour chaque teinte de base,

d) — à mesurer, par colorimétrie, les composantes trichromatiques X, Y, Z de l'échantillon à contretyper, à partir desquelles sont obtenues les coordonnées trichromatiques Y, x, y de la teinte de cet échantillon,

e) — à déterminer, à partir du premier fichier et des valeurs issues de la mesure colorimétrique, les mêmes trois valeurs caractéristiques (Y, Pu, λd) pour la teinte à contretyper, et

f) — par approximations mathématiques successives, à déterminer comme à l'étape c) un mélange d'au moins quatre teintes de base, dont le blanc et le noir, qui ait ces mêmes trois valeurs caractéristiques égales à celles de la teinte à contretyper, à la tolérance près en tenant compte que le noir et/ou le blanc permettent de régler la luminance (Y), le mélange noir et blanc permet de régler la pureté (Pu) et le mélange des autres composants trichromatiques permet de régler la longueur d'onde dominante (λd), et

g) — à exécutes effectivement le mélange ainsi determiné.

Les valeurs K et S des teintes de base sont calculées à partir des courbes de réémission spectrales des dégradés au blanc et au noir des teintes de base, la concentration de ces dégradés étant dèterminée selon la nature de la teinte de base pour obtenir la meilleure précision sur le calcul des coefficients K et S. Ces courbes de réémission spectrale sont obtenues par spectrophotométrie, par le fabricant de peinture ou par le fournisseur de l'appareillage nécessaire à la mise en oeuvre de l'invention.

Si les lots successifs de teintes de base sont fournis par le fabricant avec un défaut de constance des valeurs K et S, il suffira à l'utilisateur de faire, sur des dégradés au blanc et au noir de ces teintes, un mesure colorimétrique des valeurs trichromatiques pour calculer un coefficient de correction.

Dans une forme d'exécution préférée de l'invention, le premier fichier des valeurs des composantes trichromatiques spectrales couvre le spectre visible, de préférence, de 1 nm en 1 nm, soit 301 valeurs pour $\bar{x}$ (λ), 301 valeurs pour $\bar{y}(\lambda)$, 301 valeurs pour $\bar{z}(\lambda)$. La mise en mémoire de ce fichier aboutit à la mise en mémoire du lieu spectral qui est la courbe des longueurs d'ondes correspondant à chaque combinaison de coordonnées trichromatiques x, y (comme x+y+z=1, il suffit d'utiliser x et y, le point neutre W étant donné par x=1/3, y=1/3 sous un illuminant équiénergétique hypothétique).

Le second fichier couvre le spectre visible de 20 nm en 20 nm, soit 16 valeurs de K et 16 valeurs de S pour chaque teinte de base.

Dans la pratique, les trois caractéristiques des teintes de base et de la teinte à contretyper, fonctions de X, Y et Z, sont la longueur d'onde dominante $\lambda d_1$, $\lambda d_2$, ... $\lambda d_n$, la luminance $Y_1$, $Y_2$, ... $Y_n$ et la pureté $Pu_1$, $Pu_2$, ... $Pu_n$.

La détermination du mélange final par approximations successives se fait par approches successives, dans cet ordre: la longueur d'onde dominante, la luminance et la pureté.

L'approche de la longueur d'onde dominante se fait par sélection d'au moins deux teintes de base dont les longueurs d'onde dominante $\lambda d_1$ et $\lambda d_2$ encadrent la longueur d'onde dominante λd de la teinte à contretyper et par détermination d'un rapport de mélange entre ces teintes jusqu'à obtenir un mélange dont la longueur d'onde dominante $\lambda d_m$ soit satisfaisante.

On passe alors à l'approche de la luminance. Cette approche se fait par adjonction de blanc ou de noir, au mélange issu de l'étape précédente, selon que sa luminance est plus faible ou plus forte que celle de la teinte à contretyper, jusqu'à obtenir une luminance $Y_m$ satisfaisante.

On passe ensuite à l'approche de la pureté qui se fait, en deux étapes, à savoir:

— détermination d'un gris à luminance égale à celle de la teinte à contretyper, puis

— adjonction de ce gris au mélange issu de l'étape précédente jusqu'à obtenir une pureté $Pu_m$ satisfaisante.

Entre chaque approche, on calcule la courbe de réémission spectrale du mélange obtenu et la valeur de la caractéristique fonction de X, Y, Z objet de l'approche, après quoi l'on comporte la valeur obtenue à la valeur voulue pour déterminer si l'écart entre dans les limites de tolérance initialement fixées.

Dans la négative, on répète l'approche par un nouvelle approximation; dans l'affirmative, on passe à l'approche de la caractéristique suivante.

On notera que X, Y et Z se calculent comme suit:

$$X=\Sigma R(\lambda)E(\lambda)\bar{x}(\lambda)d(\lambda)$$

$$Y=\Sigma R(\lambda)E(\lambda)\bar{y}(\lambda)d(\lambda)$$

$$Z=\Sigma R(\lambda)E(\lambda)\bar{z}(\lambda)d(\lambda)$$

où R désigne la réflectance, E l'illuminant, $\bar{x}(\lambda)$, $\bar{y}(\lambda)$ et $\bar{z}(\lambda)$ les composantes trichromatiques spectrales, et $d(\lambda)$ l'écart choisi entre deux longueurs d'onde.

Lorsque la première approche des trois caractéristiques λd, Y et Pu est terminée, on calcule la courbe de réémission spectrale du mélange obtenu et la valeur des trois caractéristiques objets de l'approche, après quoi l'on détermine si le ΔE tel que défini par la C.I.E., à savoir:

$$\Delta E=(\Delta L^{*2}+\Delta a^{*2}+\Delta b^{*2})^{1/2}$$

où $L^*$, $a^*$ et $b^*$ sont des fonctions de X, Y et Z entre dans la limite de tolérance initialement fixée.

On comprend, en effet, que chaque nouvelle adjonction de teinte introduit une dérive dans la ou les caractéristiques antérieurement approchées, en particulier à cause de l'effet Aubert, et que cette dérive peut être telle qu'elle rende inacceptable le mélange obtenu.

Si ΔE es supérieur à la tolérance fixée, on entreprend une deuxième approche, et ainsi de suite, jusqu'à ce que le ΔE du mélange résultant soit dans la tolérance fixée.

De préférence, l'écart admissible fixé au départ pour chaque caractéristique est relativement large et il est automatiquement réduit à chaque réitération des trois approches.

On notera encore que, dès la première sélection des teintes à mélanger, on vérifie que la pureté du mélange de ces teintes est supérieure à la pureté de la teinte à contretyper. Si tel n'est pas le cas, il est inutile d'aller plus loin: on ne parviendra jamais à obtenir un mélange satisfaisant aux conditions voulues.

Lorsque l'on parvient à un mélange dont la longueur d'onde dominante, la luminance et la pureté sont acceptables, le processus est terminé: dans la version la plus simple, on obtient, à l'écran ou à l'imprimante, une seule composition d'une peinture de teinte à partir de la collection de teintes de base, et l'utilisateur n'a plus qu'à effectuer le mélange des teintes de base dans les proportions indiquées dans la composition.

Il est bien entendu que ce mélange est le premier mélange réellement effectué: toutes les opérations de mélange antérieures sont purement fictives.

Le mélange obtenu, s'il est satisfaisant sur le plan théorique, peut, en pratique, avoir un ΔE inacceptable en raison, par exemple, de problèmes de floculation entre pigments, du mode d'application, etc. . . . Pour remédier à cette situation, on procède à une mesure colorimétrique de la teinte effectivement obtenue et on compare ses caractéristiques à celles de la teinte à contretyper, après quoi l'on corrige par adjonction de la quantité voulue de l'une ou l'autre teinte de base.

Le procédé selon l'invention ne proposant, dans sa version la plus simple, qu'une seule formule de teinte, il est parfaitement adapté à des utilisateurs ne possédant pas de personnel hautement qualifié en peinture.

Il convient tout particulièrement à la petite industrie productrice ou utilisatrice de peintures de teintes.

La présente invention trouve son application, en particulier dans le cadre de l'utilisation des appareils dénommés automélangeurs qui permettent, après introduction d'une formule de composition, de fabriquer une quantité déterminée de mélange. Ces appareils sont utilisés depuis environ deux décennies chez les distributeurs de peinture carrosserie et bâtiment, ainsi que par quelques industries.

L'utilisation de tels appareils est affectée de deux contraintes qui n'ont cependant pas nuit à leur diffusion importante.

a) L'automélangeur ne peut être alimenté que par les teintes de base d'une qualité constante distribuées par un même fournisseur.

b) L'automélangeur ne peut être utilisé qu'avec les formules communiquées par le fabricant de teintes de base, qui doit procéder, en outre, à la mise à jour permanente du formulaire.

Ces contraintes entraînement les conséquences suivantes:

1) L'automélangeur est lié à un fabricant de peinture. Il n'est pas rare chez un distributeur de rencontrer plusieurs automélangeurs permettant d'obtenir plusieurs qualités de peinture de divers fabricants.

2) La qualité constante exigée par l'automélangeur entraîne une contrainte de production chez le fabricant de peinture, laquelle se traduit par un surcoût de fabrication.

3) La mise à jour permanente du formulaire impose au fabricant d'avoir un laboratoire de colorimétrie et une infrastructure commerciale adaptée à cette contrainte.

L'ensemble de ces conséquences fait que le coût d'une peinture mise en teinte par un automélangeur approche le double du prix d'une qualité identique formulée par un procédé classique à partir de produits de série. Seule la souplesse de production remarquable et le délai d'exécution extrêmement court qui en découle ont permis la diffusion importante des automélangeurs pour la réalisation des teintes en petites quantités.

Le procédé selon l'invention supprime les deux contraintes précédemment évoquées.

En effet, il permet d'adapter l'automélangeur à l'utilisation de teintes de base de qualité quelconque, donc en provenance de divers fournisseurs, et il supprime la nécessité d'un formulaire préétabli.

De plus, les teintes ainsi fabriquées, hors amortissement du matériel nécessaires à la mise en oeuvre du procédé selon l'invention, sont obtenues à partir de bases quelque deux fois moins coûteuses que les bases liées à l'automélangeur.

L'invention étend également sa portée à l'appareillage mettant en oeuvre le nouveau procédé, appareillage qui pourra comprendre:

— un colorimètre de contrôle tristimulus adapté à mesurer les coordonnées trichromatiques de l'échantillon à contretyper

— un calculateur calculant à partir:

. des mesures colorimétriques,

. de la courbe de l'illuminant sous lequel travaille le colorimètre,

. des valeurs K et S des teintes des base, et

. des valeurs $\bar{x}(\lambda)$, $\bar{y}(\lambda)$ et $\bar{z}(\lambda)$ de la C.I.E.,

la composition d'une peinture dont trois valeurs caractéristiques, fonctions des composants trichromatiques X, Y et Z, sont égales à celles de la teinte à contretyper, à la tolérance près, et

— le cas échéant, un automélangeur asservi au calculateur.

Il est entendu que, lorsque l'on écrit que le colorimètre est adapté à mesurer les coordonnées trichromatiques, il faut comprendre que le colormètre donne trois valeurs qui reflètent X, Y et Z et que ce sont ces trois valeurs que l'on exploite.

Comme on l'a vu plus haut, les trois valeurs caractéristiques des teintes de base et de la teinte à contretyper, peuvent être la longueur d'onde dominante $\lambda d$, la luminance Y et la pureté Pu.

Les colorimètres ayant leurs "équations personnelles", dues à leur principe de construction d'un modèle à l'autre, une correction sera prévue dans le calculateur pour en tenir compte.

Dans un autre mode de mise en oeuvre de l'invention, les teintes de base sont des concentrés pigmentaires susceptibles de donner des peintures de qualités différentes (acryliques, glycérophtaliques, etc. . . .) par mélange avec des liants ou vernis appropriés.

On notera que, dans le cadre de la mise en oeuvre du procédé selon l'invention, on peut récuperer des lots de peinture invendus ou dont la teinte est un échec, en les utilisant comme teinte de base, dont on déterminera la courbe de réémission spectrale, puis les valeurs K et S. Ces valeurs seront entrées dans le second fichier et la peinture invendue pourra ainsi trouver une utilisation.

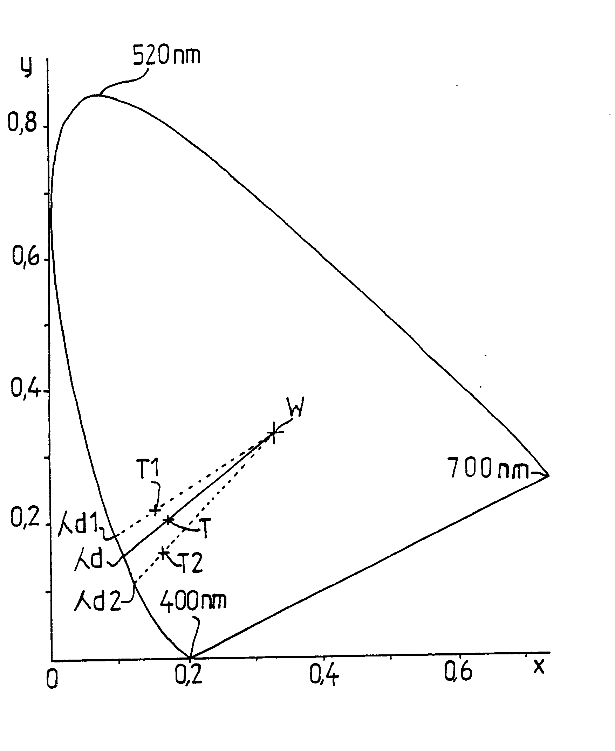

L'invention est décrite ci-après avec quelques détails supplémentaires par référence à la figure unique du dessin annexé qui représente le diagramme chromatique permettant le repérage d'une couleur par ses coordonnées trichromatiques.

Si W est le point neutre et si la teinte à contretyper correspond au point T, la longueur d'onde dominante de la teinte correspond à l'intersection $\lambda d$ de la droite WT avec le lieu spectral.

La pureté Pu de la teinte à contretyper correspond au rapport de longueurs

$$\frac{WT}{W\lambda d}$$

La luminance Y de la teinte à contretyper est obtenue directement à partir des mesures colorimètriques de l'échantillon.

Si les teintes de base dont les longueurs d'onde dominante $\lambda d_1$ et $\lambda d_2$ encadrant $\lambda d$ sont $T_1$ et $T_2$, le calcul par approximations successives partira d'un mélange fictif dans lequel les teintes $T_1$ et $T_2$ seront dans une proportion correspondant, par exemple, au rapport de distance:

$$\frac{\lambda d_1 \lambda d}{\lambda d_2 \lambda d}$$

Pour la première approche, on fixera par exemple:

$\Delta E(\lambda d) \pm 5$ nm

$\Delta E(Y) \pm 5$

$\Delta E(Pu) \pm 0,05$

Pour la deuxième approche, ces tolérances seront réduites de moitié; pour la troisième approche, elles seront de nouveau réduites de moitié, etc. . . .

Généralement, on fixe $\Delta E$ à 0,5 ou 1. Cependant, pour des industries n'exigeant pas un contretypage parfait, on peut fixer $\Delta E$ à une valeur supérieure.

On notera que s'il apparaît que le mélange de teintes de base initialement sélectionné ne peut pas convenir car sa pureté est inférieure à celle de la teinte à contretyper, il est possible de modifier le $\Delta E$ fixé si la destination finale de la peinture le permet.

Le procédé selon l'invention offre l'avantage, comme il a été dit plus haut, de demander un matériel beaucoup moins coûteux que celui actuellement disponible et de pouvoir être mis en oeuvre par du personnel non qualifié. La teinte de la composition qu'il propose est assez précise car il utilise deux teintes de base proches l'une de l'autre. Généralement, la formule trouvée n'est pas très éloignée de celle du fabricant de la teinte à contretyper car l'appareillage travaille selon les mêmes lois que celles appliquées par le coloriste.

L'inconvénient du procédé est, bien entendu, que dans sa version la plus simple, c'est-à-dire utilisant un colorimètre qui ne travaille que sous un illuminant et que sous un angle, et en n'ayant recours qu'à quatre teintes de base dont le blanc et le noir, il ne fournit qu'une formule ne tenant compte ni de la métamérie, ni du brillant spéculaire, ni du prix de revient de la formule proposée.

Il peut cependant être remédié à ces inconvénients en ayant recours à des versions plus sophistiquées du procédé et de l'appareillage.

Ainsi, pour ce qui est de la métamérie, on peut la prendre en considération en utilisant un colorimètre opérant sous différents illuminants.

Pour ce qui est du brillant spéculaire, on peut utiliser:

— soit des teintes de base ayant la même brillance que l'échantillon à contretyper,

— soit un colorimètre permettant d'effectuer des mesures sous différents angles.

En ce qui concerne le prix de revient, on peut prévoir un calcul de prix de revient dès la sélection des teintes de base $T_1$ et $T_2$, et si ce prix de revient est excessif, contraindre le calculateur à rechercher un mélange moins coûteux soit à partir de deux teintes de base $T_1$ et $T_3$, soit à partir de trois teintes de base $T_1$, $T_2$ et $T_3$.

Il est bien entendu que l'invention n'est pas limitée au mode de mise en oeuvre décrit à titre d'exemple. Ainsi, au lieu d'être constitué par les valeurs $\bar{x}(\lambda)$, $\bar{y}(\lambda$ et $\bar{z}(\lambda)$ de la C.I.E., le premier fichier pourrait tout aussi bien être constitué par les valeurs Y, x et y fournies également par la C.I.E. Au lieu d'utiliser les valeurs Y, x et y, on pourrait de même tout aussi bien avoir recours à leurs équivalents classiques tels que L*, a* et b*. Par ailleurs, si le procédé utilise généralement la loi de Kubelka Munk rappelée plus haut (II) dans sa version à deux constantes relatives, il peut aussi appliquer la version à une constante, par exemple dans le cas de teinture pour fibre textile, ou la version à deux constantes absolues, laquelle permet de déterminer la charge pigmentaire nécessaire pour obtenir une opacité donnée ou formuler une couche semi-transparente, en tenant compte de la couleur su support sur lequel la peinture sera appliquée. Le procédé pourrait encore utiliser toute autre loi telle que la loi de Beer-Lambert permettant le calcul des composants d'un mélange observé par transparence.

**Revendications**

1. Procédé de contretypage d'une teinte par formulation absolue d'une composition faite à partir d'une collection de teintes de base, sans mesure de la courbe de réflectance de la teinte à contretyper, caractérisé en ce qu'il consiste:

a) — à constituer un premier fichier formé, d'une part, des valeurs des composantes trichromatiques spectrales $\bar{x}(\lambda)$, $\bar{y}(\lambda)$ et $\bar{z}(\lambda)$ fournies par la C.I.E. et, d'autre part, de la courbe de l'illuminant $E(\lambda)$ sous lequel travaille un colorimètre qui sera utilisé pour mesurer l'échantillon à contretyper,

b) — à constituer selon la loi de Kubelka-Munk un second fichier formé des valeurs de coefficient d'absorption K et de coefficient de diffusion S de chaque teinte de base à chaque longueur d'onde,

c) — à calculer, à partir de ces deux fichiers, les valeurs de trois caractéristiques (Y, Pu, $\lambda$d), fonctions des composantes trichromatiques X, Y et Z, pour chaque teinte de base,

d) — à mesurer, par colorimétrie, les composantes trichromatiques X, Y, Z de l'échantillon à contretyper, à partir desquelles sont obtenues les coordonnées trichromatiques Y, x, y de la teinte de cet échantillon,

e) — à déterminer, à partir du premier fichier et des valeurs issues de la mesure colorimétrique, les mêmes trois valeurs caractéristiques (Y, Pu, $\lambda$d) pour la teinte à contretyper, et

f) — par approximations mathématiques successives, à déterminer comme à l'étape c) un mélange d'au moins quatre teintes de base, dont le blanc et le noir, qui ait ces mêmes trois valeurs caractéristiques égales à celles de la teinte à contretyper, à la tolérance près en tenant compte que le noir et/ou le blanc permettent de régler la luminance (Y), le mélange noir et blanc permet de régler la pureté (Pu) et le mélange des autres composants trichromatiques permet de régler la longueur d'onde dominante ($\lambda$d), et

g) — à exécuter effectivement le mélange ainsi déterminé.

2. Procédé selon la revendication 1, caractérisé en ce que le premier fichier des valeurs des composantes trichromatiques spectrales couvre le spectre visible en pas de 1 nm concernant les composantes trichromatiques spectrales $\bar{x}(\lambda)$, $\bar{y}(\lambda)$ et $\bar{z}(\lambda)$, soit 301 valeurs pour chaque composante trichromatique.

3. Procédé selon la revendication 1, caractérisé en ce que le second fichier couvre le spectre, visible en pas de 20 nm, soit 16 valeurs de K et 16 valeurs de S pour chaque teinte de base.

4. Procédé selon l'une quelconque des revendications 1 à 3, caractérisé en ce que les trois caractéristiques fonctions de X, Y et Z des teintes de base et de la teinte à contretyper sont la longueur d'onde dominante $\lambda d_1$, $\lambda d_2$, ... $\lambda d_n$, la luminance $Y_1$, $Y_2$, ... $Y_n$ et la pureté $Pu_1$, $Pu_2$, ... $Pu_n$.

5. Procédé selon la revendication 4, caractérisé en ce que la détermination du mélange final par approximations mathématiques successives se fait par approches successives, dans cet ordre, de la longueur d'onde dominante, de la luminance et de la pureté.

6. Procédé selon la revendication 4 ou 5, caractérisé en ce que l'approche de la longueur d'onde dominante se fait par sélection d'au moins deux teintes de base dont les longueurs d'onde dominante $\lambda d_1$ et $\lambda d_2$ encadrent la longueur d'onde dominante $\lambda$d de la teinte à contretyper et par détermination d'un rapport de mélange entre ces teintes, tel que la longueur d'onde dominant λm du mélange soit satisfaisante.

7. Procédé selon la revendication 6, caractérisé en ce que l'approche de la luminance (Y), se fait que adjonction de blanc ou de noir, au mélange issu de l'étape précédente, selon que sa luminance est plus faible ou plus forte que celle de la teinte à contretyper, jusqu'à obtenir une luminance $Y_m$ satisfaisante.

8. Procédé selon la revendication 7, caractérisé en ce que l'approche de la purete (Pu) se fait en deux étapes, à savoir:

— détermination d'un gris à luminance égale à celle de la teinte à contretyper, puis

— adjonction mathématique de ce gris au mélange issu de l'étape précédente jusqu'à obtenir une pureté $Pu_m$ satisfaisante.

9. Procédé selon l'une quelconque des revendications 5 à 8, caractérisé en ce que, entre chaque approche mathématique, on calcule la courbe de réémission spectrale R(λ) du mélange obtenu et la valeur de la caractéristique fonction de X, Y ou Z objet de l'approche mathématique, après quoi l'on compare la valeur obtenue à la valeur voulue pour déterminer si l'écart d(λ) entre dans les limites de tolérance initialement fixées.

10. Procédé selon l'une quelconque des revendications 5 à 9, caractérisé en ce que, lorsque la première approche mathématique des trois caractéristiques λd, Y et Pu est terminée, on calcule la courbe de réémission spectrale du mélange obtenu et la valeur des trois caractéristiques objets de l'approche mathématique, après quoi l'on détermine si la mesure pour la différence de teintes ΔE tel que défini par la C.I.E. entre dans la limite de tolérance initialement fixée.

11. Procédé selon l'une quelconque des revendications 1 à 10, caractérisé en ce qu'il comporte une étape de correction, ou étalonnage, pour tenir compte des équations personnelles du colorimètre utilisé.

12. Appareillage pour la mise en oeuvre, du procédé selon l'une quelconque des revendications 1 à 11, caractérisé en ce qu'il comprend:

— un colorimètre de contrôle tristimulus adapté à mesurer les coordonnées trichromatiques de l'échantillon à contretyper et,

— un calculateur calculant à partir:

. des mesures colorimétriques,

. de la courbe de l'illuminant E(λ) sous lequel travaille le colorimètre,

. des valeurs K et S des teintes de base, et

. des valeurs $\bar{x}(\lambda)$, $\bar{y}(\lambda)$ et $\bar{z}(\lambda$ de la C.I.E.,

la composition d'une peinture dont les valeurs de trois caractéristiques fonctions des composantes trichromatiques X, Y, Z, sont égales à celles de la teinte à contretyper, à la tolérance près.

13. Appareillage selon la revendication 12, caractérisé en ce que les trois caractéristiques fonctions de X, Y et Z sont la longueur d'onde dominante λd, la luminance Y et la pureté Pu.

14. Appareillage selon la revendication 12 ou 13, caractérisé en ce qu'il comprend, en outre au automélangeur asservi au calculateur.

**Patentansprüche**

1. Verfahren zum Duplizieren eines Farbtons durch absolute Rezeptberechnung einer bestehenden Mischung, ausgehend von einer Sammlung von Basisfarbtönen, ohne Messen der Kurve des Reflektionsgrades des zu duplizierenden Farbtons, dadurch gekennzeichnet, daß es besteht aus:

a) Bilden einer ersten Hauptgruppe, die einerseits aus den Werten der trichromatischen Spektralkomponenten $\bar{x}(\lambda)$, $\bar{y}(\lambda)$ und $\bar{z}(\lambda)$ geliefert von der C.I.E. (Internationale Beleuchtungskommission), und andererseits aus der Kurve der Lichtquelle E(λ) gebildet ist, unter der ein Farbenmesser bzw. Colorimeter arbeitet, das verwendet wird, um das zu duplizierende Muster zu messen,

b) Bilden nach dem Gesetz von Kubelka-Munk einer zweiten Hauptgruppe von Werten des Absorptionskoeffizienten K und des Diffusionskoeffizienten S eines jeden Basisfarbtons bei jeder Wellenlänge,

c) Berechnen ausgehend von den beiden Hauptgruppen der drei kennzeichnenden Werte (Y, Pu, λd), welche Funktionen der trichromatischen Bestandteile X, Y und Z für jeden Basisfarbton sind,

d) Messen mittels Colorimetrie der trichromatischen Bestandteile X, Y, Z des zu duplizierenden Musters, ausgehend von denen die trichromatischen Angaben Y, x, y des Farbtons dieses Musters erhalten werden,

e) Bestimmen ausgehend von der ersten Hauptgruppe und der von der colorimetrischen Messung ausgehenden Werte, derselben drei kennzeichnenden Werte (Y, Pu, λd) für den zu duplizierenden Farbton, und

f) durch aufeinanderfolgende mathematische Näherungen, Bestimmen, wie im Schritt c) einer Mischung von wenigstens vier Basisfarbtönen, darunter das Weiße und das Schwarze, welche diese drei kennzeichnenden Werte aufweisen, die im Rahmen der Toleranz gleich jenen des zu duplizierenden Farbtons sind, unter Berücksichtigung, daß das Schwarze und/oder das Weiße erlauben, die Leuchtdichte (Y) einzustellen, wobei die Mischung Schwarz und Weiß erlaubt, die Reinheit (Pu) einzustellen und die Mischung der anderen trichromatischen Bestandteile erlaubt die dominierende Wellenlänge (λd) einzustellen, und

g) tatsächliches Ausführen der so bestimmten Mischung.

2. Verfahren nach Anspruch 1, dadurch gekennzeichnet, daß die erste Hauptgruppe der Werte der trichromatischen spektralen Bestandteile das sichtbare Spektrum in Schritten von 1 nm abdeckt, betreffend die spektralen trichromatischen Bestandteile $\bar{x}(\lambda)$, $\bar{y}(\lambda)$ und $\bar{z}(\lambda)$, was gleich 301 Werten für jeden trichromatischen Bestandteil ist.

3. Verfahren nach Anspruch 1, dadurch gekennzeichnet, daß die zweite Hauptgruppe das sichtbare Spektrum in Schritten von 20 nm abdeckt, was 16 K Werte und 16 S Werte für jeden Basisfarbton ergibt.

4. Verfahren nach einem der Ansprüche 1 bis 3, dadurch gekennzeichnet, daß die drei kennzeichnenden Funktionen von X, Y und Z der Basisfarbtöne und des zu duplizierenden Farbtons die dominante Wellenlänge $\lambda d_1$, $\lambda d_2$, ... $\lambda d_n$, die Leichtdichte $Y_1$, $Y_2$ ... $Y_n$ und die Reinheit $Pu_1$, $Pu_2$ ... $Pu_n$ sind.

5. Verfahren nach Anspruch 4, dadurch gekennzeichnet, daß die Bestimmung der Endmischung durch aufeinanderfolgende mathematische Approximationen, durch aufeinanderfolgende Annäherungen, in dieser Ordnung, der dominanten Wellenlänge, de Leuchtdichte und der Reinheit erfolgt.

6. Verfahren nach Anspruch 4 oder 5, dadurch gekennzeichnet, daß die Annäherung der dominanten Wellenlänge durch Selektion wenigstens von zwei Basisfarbtönen, deren dominante Wellenlängen $\lambda d_1$ und $\lambda d_2$ die dominante Wellenlänge $\lambda d$ des zu duplizierenden Farbtons umrahmen, und durch Bestimmung eines Mischungsverhältnisses unter diesen Farbtönen erfolgt, derart, daß die dominante Wellenlänge $\lambda_m$ der Mischung zufriedenstellend ist.

7. Verfahren nach Anspruch 6, dadurch gekennzeichnet, daß die Annäherung an die Leuchtdichte (Y) durch Zuordnung von weiß oder schwarz zur Mischung erfolgt, die von dem vorhergehenden Schritt ausgegeben wurde, gemäß dem seine Leuchtdichte schwächer oder stärker ist als jene des zu duplizierenden Farbtons, bis eine ausreichende Leuchtdichte $Y_m$ erreicht wird.

8. Verfahren nach Anspruch 7, dadurch gekennzeichnet, daß die Annäherung an die Reinheit (Pu) in zwei Schritten erfolgt, nämlich:

— Bestimmen eines Grau bei einer Leuchtdichte, die gleich jener des zu duplizierenden Farbtons ist, sodann

— mathematische Zuordnung bzw. Hinzufügung dieses Graus zur Mischung, welche von dem vorhergehenden Schritt ausgegeben wurde, bis zum Erhalt einer ausreichenden Reinheit $Pu_m$.

9. Verfahren nach einem der Ansprüche 5 bis 8, dadurch gekennzeichnet, daß zwischen jeder mathematischen Näherung die Spektralwiederemissionskurve $R(\lambda)$ der erhaltenen Mischung und der Wert der mathematisch kennzeichnenden Funktion von X, Y oder Z, die Gegenstand der mathematischen Annäherung sind, berechnet werden, wonach der erhaltene Wert mit dem gewünschten Wert verglichen wird, um zu bestimmen, ob der Abstand $d(\lambda)$ in die ausgangs festgelegten Toleranzgrenzen hineinpaßt.

10. Verfahren nach einem der Ansprüche 5 bis 9, dadurch gekennzeichnet, daß, wenn die erste mathematische Annäherung der drei Eigenschaften $\lambda d$, Y und Pu bestimmt ist, die Kurve der spektralen Wiederemission der erhaltenen Mischung und der Wert der drei Eigenschaften, die Gegenstände der mathematischen Annäherung sind, errechnet wird, wonach bestimmt wird, ob die Messung für den Unterschied der Farbtöne $\Delta E$, wie sie durch die C.I.E. (Internationale Beleuchtungskommission) definiert ist, in die ausgangs festgelegten Toleranzgrenzen hineinpaßt.

11. Verfahren nach einem der Ansprüche 1 bis 10, dadurch gekennzeichnet, daß es einen Korrekturschritt oder Eichschritt aufweist, um den gerätespezifischen Gleichungen des verwendeten Farbmessers Rechnung zu tragen.

12. Vorrichtung zur Durchführung des Verfahrens nach einem der Ansprüche 1 bis 11, dadurch gekennzeichnet, daß sie aufweist:

— ein Dreivalenz-Kontrollfarbmeßgerät, das geeignet ist, die trichromatischen Angaben bzw. Bestandteile des zu duplizierenden Musters zu messen, und

— einen Rechner, der ausgehend von:
. den colorimetrischen Messungen,
. der Lichtquellenkurve $E(\lambda)$, unter der der Farbmesser arbeitet,
. den Werten K und S der Basisfarbtöne, und
. den Werten $\bar{x}(\lambda)$, $\bar{y}(\lambda)$ und $\bar{z}(\lambda)$ der C.I.E. (Internationale Beleuchtungskommission),
die Zusammensetzung einer Farbe berechnet, deren Werte der drei charakteristischen Funktionen der trichromatischen Bestandteile X, Y, Z, gleich jenen des zu duplizierenden Farbtons im Rahmen der Toleranz sind.

13. Vorrichtung nach Anspruch 12, dadurch gekennzeichnet, daß die drei kennzeichnenden Funktionen von X, Y und Z die dominante Wellenlänge $\lambda d$, die Leuchdichte Y und die Reinheit Pu sind.

14. Vorrichtung nach Anspruch 12 oder 13, dadurch gekennzeichnet, daß sie weiterhin einen Selbstmischer aufweist, der rechnerabhängig ist.

**Claims**

1. A method for countertyping a tint by absolute formulation of a composition made from a collection of basic tints, without measuring the reflectance curve of the tint to be countertyped, characterized in that it consists:

a) in forming a first file formed, on the one hand, from the values of the spectral trichromatic

components $\bar{x}(\lambda)$, $\bar{y}(\lambda)$ and $\bar{z}(\lambda)$ supplied by the C.I.E. and, on the other hand, from the curve of the illuminant $E(\lambda)$ under which works a colorimeter which will be used for measuring the sample to be countertyped,

b) in forming according to the Kubelka-Munk law, a second file formed on the absorption coefficient value K and diffusion coefficient value S of each basic tint for each wave length,

c) in calculating, from these two files, the values of three characteristics (Y, Pu, $\lambda$d), functions of the trichromatic components X, Y and Z, for each basic tint,

d) in measuring, by colorimetry, the trichromatic components X, Y, Z of the sample to be countertyped, from which the trichromatic coordinates Y, x, y of the tint of this sample are obtained,

e) in determining, from the first file and from the values obtained by the colorimetric measurement, the same three characteristic values (Y, Pu, $\lambda$d) for the tint to be countertyped, and

f) by successive mathematical approximations, in determining, as under step c), a mixture of at least four basic tints, including white and black, which have the same three characteristic values equal to those of the tint to be countertyped, within admitted tolerances, taking into account the fact that white and/or black permit to adjust the luminance (Y), the mixture black and white permits to adjust the purity (Pu) and the mixture of the other trichromatic components permits to adjust the dominant wave length ($\lambda$d), and

g) to actually execute the mixture thus determined.

2. The method according to claim 1, characterized in that the first file of the values of the spectral trichromatic components covers the visible spectrum in steps of 1 nm concerning the spectral trichromatic components $\bar{x}(\lambda)$, $\bar{y}(\lambda)$ and $\bar{z}(\lambda)$, i.e. 301 values for each trichromatic component.

3. The method according to claim 1, characterized in that the second file covers the visible spectrum in steps of 20 nm, i.e. 16 values K and 16 values S for each basic tint.

4. The method according to any one of claims 1 to 3, characterized in that the three characteristics, functions of X, Y and Z of the basic tints and of the tint to be countertyped, are the dominant wave length $\lambda d_1$, $\lambda d_2$, ... $\lambda d_n$, the luminance $Y_1$, $Y_2$, ... $Y_n$ and the purity $Pu_1$, $Pu_2$, ... $Pu_n$.

5. The method according to claim 4, characterized in that determination of the final mixture by successive mathematical approximations is obtained by successive approximations, in this order, of the dominant wave length, of the luminance and of the purity.

6. The method according to claim 4 or 5, characterized in that the approximation of the dominant wave length is made by selecting at least two basic tints whose dominant wave lengths $\lambda d_1$ and $\lambda d_2$ enclose the dominant wave length $\lambda_d$ of the tint to be countertyped and by determining a mixture ratio between these tints, such that the dominant wave length $\lambda_m$ of the mixture is satisfying.

7. The method according to claim 6, characterized in that the approximation of the luminance (Y) is made by adding white or black to the mixture obtained in the preceding step, depending on whether its luminance is lower or higher than that of the tint to be countertyped, until a satisfactory luminance $Y_m$ is obtained.

8. The method according to claim 7, characterized in that the approximation of the purity (Pu) is made in two steps, namely:

— determination of a grey with luminance equal to that of the tint to be countertyped; then

— mathematical addition of this grey to that mixture from the preceding step until a satisfactory purity $Pu_m$ is obtained.

9. The method according to any one of claims 5 to 8, characterized in that, between each mathematical approximation, the spectral re-emission curve $R(\lambda)$ of the mixture obtained and the value of the characteristic function of X, Y or Z object of the mathematical approximation are calculated, after which the value obtained is compared with the desired value for determining if the difference $d(\lambda)$ comes within the initially fixed limits of tolerance.

10. The method according to any one of claims 5 to 9, characterized in that, when the first mathematical approximation of the three characteristics $\lambda$d, Y and Pu is finished, the spectral re-emission curve of the mixture obtained and the value of the three characteristics, objects of the mathematical approximation, are calculated, after which it is determined whether the measurement for the tint difference $\Delta E$, such as defined by the C.I.E. comes within the initially fixed tolerance limit.

11. The method according to any one of claims 1 to 10, characterized in that it includes a correction or calibration step, so as to take into account the personal equations of the colorimeter used.

12. Apparatus for implementing the method according to any one of claims 1 to 11, characterized in that it comprises:

— a tristimulus control colorimeter adapted for measuring the trichromatic coordinates of the sample to be countertyped, and

— a processor calculating from:

. the colorimetric measurements,

. the curve of the illuminant $E(\lambda)$ under which the colorimeter works,

. the values K and S of the basic tints, and

. the values $\bar{x}(\lambda)$, $\bar{y}(\lambda)$ and $\bar{z}(\lambda)$ of the C.I.E.,

the composition of a paint in which the values of three characteristic functions of the trichromatic components X, Y, Z are equal to those of the tint to be countertyped, within admitted tolerances.

13. The apparatus according to claim 12, characterized in that the three characteristics functions of X, Y and Z are the dominant wave length λd, the luminance Y and the purity Pu.

14. Apparatus according to claim 12 or 13, characterized in that it further comprises an automixer under the control of the processor.